# EUROPEAN PATENT APPLICATION

(11) **EP 2 481 998 A1**
(43) Date of publication of application: **01.08.2012**
(21) Application number: 10818516.6
(22) Date of filing: 21.07.2010
(51) Int. Cl.: F24F 11/02, G05F 1/56

(54) **AIR CONDITIONER**

(30) Priority: 25.09.2009 JP 2009220283
(71) Applicant: Mitsubishi Heavy Industries, Ltd., Tokyo 108-8215 (JP)
(72) Inventor: SHIMIZU, Kenji, Tokyo 108-8215 (JP); SUMITO, Kiyotaka, Tokyo 108-8215 (JP); KANIE, Tetsuo, Tokyo 108-8215 (JP); SATO, Takeshi, Tokyo 108-8215 (JP)
(74) Representative: Henkel, Breuer & Partner
(86) International application number: PCT/JP2010/004660
(87) International publication number: WO 2011/036835

(57) **Abstract**

The present invention has an object to provide an air conditioner that can reduce standby electric power without using a large component such as a relay or an auxiliary power supply. When a remote controller issues a stop command, a first switch 21 and a second switch 22 are turned off by command of an outdoor microcomputer 43, and supply of electric power from a commercial power supply C.P to a compressor driving motor 27 and a fan motor 28 is stopped. Simultaneously, a low-dropout voltage regulator 37 is turned off by command of the outdoor microcomputer 43, and supply of electric power from an outdoor control power supply transformer 34 to an inverter control unit 38, a fan motor control unit 39, and an actuator 40 is stopped.

## Description

### Technical Field

The present invention relates to an air conditioner with low standby electric power consumption.

### Background Art

An air conditioner mainly includes components to be controlled such as a compressor, various valves such as a motor expansion valve, a fan motor for heat exchange and driving a louver, or the like, which constitute a refrigeration cycle. Generally, a control power supply provided in an outdoor unit supplies direct current electric power to the components to be controlled except the compressor. Meanwhile, commercial power supply is rectified and smoothed to supply electric power to the compressor.

A switch is connected to a path in which a commercial power supply is rectified and smoothed to supply electric power for driving a compressor, and when the compressor is off, the switch is turned off to stop supply of electric power to the compressor. However, even when the supply of electric power to the compressor is stopped, DIRECT CURRENT electric power is supplied from a control power supply in the outdoor unit to the components to be controlled such as various valves such as a motor expansion valve, a fan motor for heat exchange and driving a louver, or the like except the compressor, which constitute a refrigeration cycle.

Thus, proposals are made to avoid such unnecessary electric power consumption.

For example, Patent Document 1 proposes that a switch is provided in a path in which electric power is supplied from a commercial power supply to an outdoor control power supply, and the switch is turned on or off depending on states in standby and normal driving to stop supply of electric power from the commercial power supply to the outdoor control power supply, and further an auxiliary power supply supplies electric power to an indoor unit, supply of electric power from the outdoor control power supply to the indoor unit being stopped, thereby reducing power consumption of an air conditioner.

However, Patent Document 1 requires providing an auxiliary power supply, and is not preferable in terms of cost.

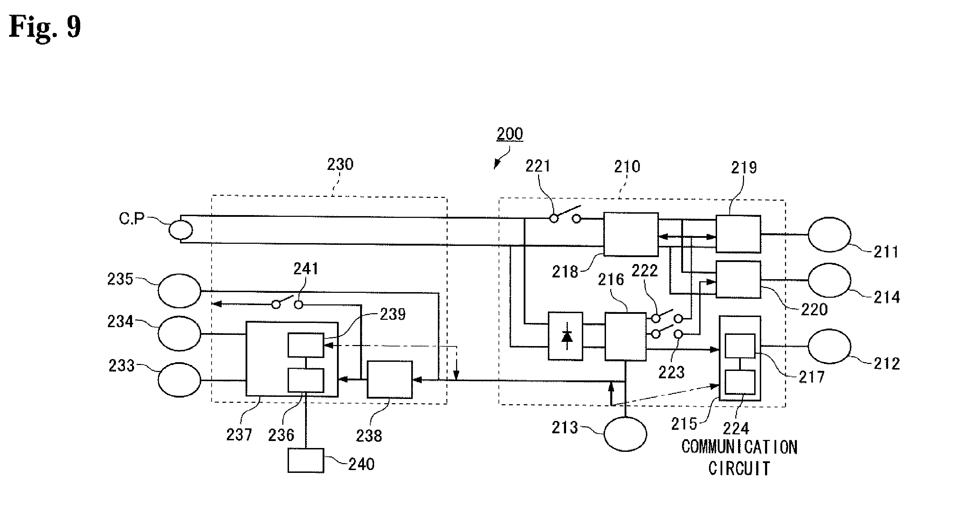

Patent Document 2 discloses an air conditioner that can reduce power consumption in standby without using an auxiliary power supply. Now, the air conditioner 200 will be described with reference to FIG. 9.

The air conditioner 200 includes an outdoor unit 210 and an indoor unit 230.

The outdoor unit 210 includes a compressor 211, various valves such as an electronic expansion valve 212 or a four-way valve 213, and a fan motor for heat exchange (outdoor fan) 214 that constitute a refrigeration cycle as components to be controlled.

Direct current voltage is supplied from a control power supply 216 to an outdoor control circuit 215 including a microcomputer 217 in the outdoor unit 210. Meanwhile, to the compressor 211, a direct current voltage of a commercial power supply C.P rectified and smoothed by a converter 218 is supplied to an inverter 219 in order to control a compressor drive motor.

In an indoor unit 230, electric power is supplied from the control power supply 216 in the outdoor unit 210 to an indoor control power supply 238, and electric power is supplied from the indoor control power supply 238 to an indoor control circuit 237 including an indoor microcomputer 236. The indoor unit 230 includes a fan motor for heat exchange (indoor fan) 235, a louver motor 233, and a two-way valve 234 as components to be controlled.

In a standby state in which the compressor 211 is not operated, a switch 221 that connects the commercial power supply C.P and the converter 218 is turned off to stop supply of electric power to the compressor 211 and the fan motor 214.

In order to stop unnecessary supply of electric power in the standby state, the outdoor unit 210 includes a switch 222 in a middle of supply of electric power from the outdoor control power supply 216 to the inverter 219, and a switch 223 in a middle of supply of electric power to a fan motor drive circuit 220. The indoor unit 230 similarly includes a switch 239 in a middle of supply of electric power to the fan motor 235.

When the air conditioner 200 stops operation and enters the standby state, the indoor microcomputer 236 turns off a switch 241 and stops supply of electric power to the fan motor 235. The outdoor microcomputer 217 waits until an output voltage of the converter 218 reaches, for example, 10 V or less, and then turns off the switches 221 and 222, and stops supply of electric power to the inverter 219 and the fan motor drive circuit 220.

### Citation List

### Patent Document

Patent Document 1: Japanese Patent No. 3730808
Patent Document 2: Japanese Patent Laid-Open No. 2002-81712

### Summary of Invention

### Technical Problem

With the air conditioner 200 in Patent Document 2, when the air conditioner 200 stops operation and enters the standby state, the switches 221 and 222 are turned off to stop supply of electric power to the inverter 219 and the fan motor drive circuit 220 in the indoor unit 210, thereby reducing standby electric power without providing an auxiliary power supply.

However, relays used as the switches 221 and 222 of the air conditioner 200 in Patent Document 2 are large in size as a component, which prevents a size reduction of the air conditioner.

Also, if the relay is used as the switch, a current applied to excite the relay causes electric power loss even in normal operation.

The present invention is achieved based on such technical problems, and has an object to provide an air conditioner that can reduce standby electric power without using a large component such as a relay or an auxiliary power supply. The present invention has another object to provide an air conditioner that can reduce electric power consumption in normal operation.

### Solution to Problem

The present invention provides an air conditioner including: an indoor unit; and an outdoor unit, wherein the outdoor unit includes a first circuit and a second circuit.

The first circuit includes a converter that converts alternating current supplied from a commercial power supply into direct current, an inverter that converts direct current converted by the converter into alternating current, and a compressor driving motor to which electric power is supplied via the inverter.

The second circuit includes an outdoor control power supply that converts a voltage of the commercial power supply and supplies electric power, and a first path and a second path to which electric power is supplied from the outdoor control power supply.

The first path includes a low-dropout voltage regulator, and an electric power consumption source including an operation control unit of the inverter to which electric power is supplied via the low-dropout voltage regulator.

The second path includes an outdoor microcomputer. The outdoor microcomputer orders, for example, switching of a four-way valve, or opening of an electronic expansion valve. The four-way valve and the electronic expansion valve constitute an electric power consumption source.

In the air conditioner of the present invention, the low-dropout voltage regulator has a function of stopping supply of electric power to the electric power consumption source. In the air conditioner of the present invention, the low-dropout voltage regulator stops supply of electric power to the electric power consumption source in a standby state in which supply of electric power to the compressor driving motor is stopped. Electric power is continuously supplied from the outdoor control power supply to the outdoor microcomputer in the second path.

In the air conditioner of the present invention, the electric power consumption source includes, for example, the operation control unit of the inverter described above, and also an actuator that operates the valves (the four-way valve and the electronic expansion valve) provided on a refrigeration cycle of the air conditioner. The air conditioner of the present invention can supply electric power via the low-dropout voltage regulator to the electric power consumption source represented by the actuator, supply of electric power from the outdoor control power supply to the electric power consumption source being stoppable by the outdoor microcomputer. However, in order to reduce loads and reduce electric power loss, electric power is preferably supplied to the electric power consumption source without passing through the low-dropout voltage regulator.

In the air conditioner of the present invention, it is preferable that the second path includes a voltage detection circuit, and an output voltage from the outdoor control power supply is controlled based on a detection result of the voltage detection circuit. In the standby state of the air conditioner, supply of electric power from the outdoor control power supply to the electric power consumption source is stopped. This reduces electric power supplied from the outdoor control power supply, thereby increasing variations in voltage supplied to the outdoor microcomputer.

Thus, in the air conditioner of the present invention, the second path includes the voltage detection circuit, and performs feedback control of the output voltage based on a voltage (detected voltage) detected by the voltage detection circuit, thereby stabilizing the voltage supplied to the outdoor microcomputer.

In the air conditioner of the present invention, it is preferable for reduction in power consumption in standby to reduce performance of the outdoor microcomputer in the standby state. Reducing performance means reducing an operation clock frequency of the microcomputer, and stopping a part or all of functions of the outdoor microcomputer.

In the air conditioner of the present invention, the first circuit includes a first switch placed between the commercial power supply and the converter. The first switch controls whether electric power can be supplied to the converter. In the first circuit, it is preferable to place a zero crossing detection circuit between the first switch and the converter. In the air conditioner in the standby state, the first switch is off, and no load is placed on the zero crossing detection circuit. Thus, the zero crossing detection circuit in the present invention does not cause electric power loss in the standby state.

In the air conditioner of the present invention, the first circuit includes circuits parallel to each other between the commercial power supply and the converter, and the first switch is placed in one path of the parallel circuits. A second switch and resistance means are placed in series in order from a side of the commercial power supply in the other path of the parallel circuits.

With the configuration of the switch, the second switch is turned on with the first switch being off at the beginning of normal operation. At this time, a current passing through the resistance means and having a reduced peak of an inrush current flows toward the converter. Then, the first switch is turned on, while the second switch is turned off. Thereafter, the current flows through the first switch toward the converter. In the process so far, a period in which the second switch is on is short, and thus a small relay including small components can be used as the second switch. In the air conditioner, the current flows through only the first switch in normal operation, thereby reducing excitation loss as compared to a case where the current flows through both the first switch and the second switch.

Application of the present invention to the outdoor unit has been described above, but the present invention may be applied to an indoor unit. The indoor unit includes a configuration described below.

The indoor unit includes a first circuit and a second circuit.

The first circuit includes a converter that converts alternating current supplied from a commercial power supply into direct current, and a fan motor for a heat exchanger connected to the converter.

The second circuit includes an indoor control power supply that converts a voltage of the commercial power supply and supplies electric power, and a first path and a second path to which electric power is supplied from the indoor control power supply.

The first path includes a low-dropout voltage regulator, and an electric power consumption source including an operation control unit of the fan motor for the heat exchanger to which electric power is supplied via the low-dropout voltage regulator.

The second path includes an indoor microcomputer.

In the air conditioner of the present invention, the low-dropout voltage regulator has a function of stopping supply of electric power to the electric power consumption source. In the air conditioner of the present invention, the low-dropout voltage regulator stops supply of electric power to the operation control unit in a standby state in which supply of electric power to the fan motor for the heat exchanger is stopped.

### Advantageous Effects of Invention

The air conditioner of the present invention includes the low-dropout voltage regulator having an on/off function on a secondary side of the outdoor control power supply, and thus does not require a separate power supply circuit for the outdoor microcomputer. Also, the air conditioner of the present invention uses the low-dropout voltage regulator as a regulator that stabilizes a voltage on the secondary side, and thus can reduce electric power in the standby state without providing a large component such as a conventional relay.

### Brief Description of Drawings

[FIG. 1] FIG. 1 is a block diagram showing a configuration of an electrical circuit of an air conditioner according to a first embodiment.
[FIG. 2] FIG. 2 is a block diagram showing a configuration of an electrical circuit of an air conditioner (outdoor unit) according to a second embodiment.
[FIG. 3] FIG. 3 is a block diagram showing a configuration of an electrical circuit of an air conditioner (outdoor unit) according to a third embodiment.
[FIG. 4] FIG. 4 is a block diagram showing a configuration of an electrical circuit of an air conditioner (outdoor unit) according to a fourth embodiment.
[FIG. 5] FIG. 5 is a flowchart showing an operation procedure of the air conditioner according to the fourth embodiment.
[FIG. 6] FIG. 6 is a block diagram showing a configuration of an electrical circuit of an air conditioner (outdoor unit) according to a fifth embodiment.
[FIG. 7] FIG. 7 is a block diagram showing a configuration of an electrical circuit of an air conditioner (outdoor unit) according to a sixth embodiment.
[FIG. 8] FIG. 8 is a block diagram showing a configuration of an electrical circuit of an air conditioner (indoor unit) according to a seventh embodiment.
[FIG. 9] FIG. 9 is a block diagram showing a configuration of an electrical circuit of an air conditioner disclosed in Patent Document 2.

### Description of Embodiments

### <First embodiment>

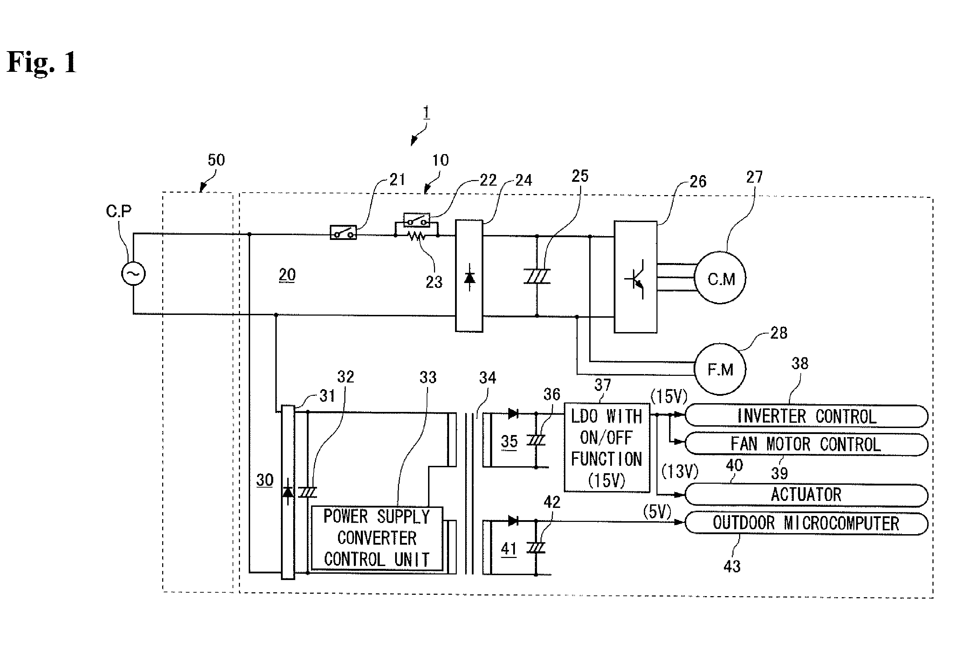

Now, a first embodiment of the present invention shown in FIG. 1 will be described.

An air conditioner 1 according to the first embodiment includes an outdoor unit 10 and an indoor unit 50, and is used an air conditioner for domestic or business use. The air conditioner 1 has a feature in the outdoor unit 10. For the indoor unit 50, a conventional one can be applied, and thus details of the indoor unit 50 will be omitted herein. The air conditioner 1 adopts a configuration in which electric power from a commercial power supply C.P is supplied via the indoor unit 50 to the outdoor unit 10. However, it goes without saying that the present invention is not limited to this configuration, but the air conditioner 1 may adopt a configuration in which electric power from the commercial power supply C.P is supplied via the outdoor unit 10 to the indoor unit 50.

The outdoor unit 10 includes a first circuit 20 connected to the commercial power supply C.P, and a second circuit 30 branching off from the first circuit 20.

The first circuit 20 supplies electric power to an alternating current compressor driving motor (C.M) 27 and a direct current fan motor (F.M) 28 for an outdoor heat exchanger. The first circuit 20 includes a converter 24 that converts alternating current from the commercial power supply C.P into direct current, and an inverter 26 that converts direct current from the converter 24 into alternating current. A capacitor 25 for smoothing an inverter input voltage is provided between the converter 24 and the inverter 26.

In the first circuit 20, the converter 24 converts alternating current from the commercial power supply C.P into direct current, and the direct current is smoothed by the capacitor 25 and then converted into alternating current by the inverter 26, and the electric power drives the compressor driving motor 27. An inverter control unit 38 continuously changes a frequency of an alternating current passed from the inverter 26 through the compressor driving motor 27. Thus, when a temperature is higher than a set temperature, the compressor driving motor 27 is rotated at high speed, and when the temperature approaches the set temperature, the rotation speed of the compressor driving motor 27 is reduced, thereby quickly stabilizing the temperature while saving electric power.

The direct current smoothed by the capacitor 25 is supplied to the fan motor 28. Current supply on/off control of the fan motor 28 is performed by command of a fan motor control unit 39.

In the first circuit 20, a first switch 21 and a second switch 22 are provided in order from a side of the commercial power supply C.P. The second switch 22 is provided in parallel with resistance means 23 provided on the first circuit 20. The first switch 21 controls on/off supply of electric power to the converter 24. The second switch 22 has a function of reducing a peak of an inrush current together with the resistance means 23.

When supply of electric power to the compressor driving motor 27 and the fan motor 28 is to be started, the first switch 21 is closed (on) with the second switch 22 being opened (off) as shown in FIG. 1. At this time, current flows through the resistance means 23 to the converter 24 and the capacitor 25. When charging of the capacitor 25 is completed, the second switch 22 is closed. Thereafter, the current flows through the second switch 22 to the converter 24 and thereafter.

The second circuit 30 supplies electric power to the inverter control unit 38, the fan motor control unit 39, an actuator 40, and an outdoor microcomputer 43. As described above, the inverter control unit 38 controls a frequency of an alternating current from the inverter 26, and the fan motor control unit 39 controls on/off of rotation of the fan motor 28. The actuator 40 is a motor actuator that operates various valves such as a four-way valve or an electronic expansion valve provided in a refrigeration cycle of the outdoor unit 10. The actuator 40 is operated by command of the outdoor microcomputer 43 (command of switching of the four-way valve or opening of the expansion valve).

On a primary side of the second circuit 30, a converter 31 that converts alternating current from the commercial power supply C.P into direct current, a capacitor 32 that smooths a direct current voltage from the converter 31, a power supply converter control unit 33 that adjusts a voltage converted by an outdoor control power supply transformer 34, and the outdoor control power supply transformer 34 that supplies electric power to a secondary side.

The secondary side of the second circuit 30 includes a first path 35 and a second path 41. Electric power from the outdoor control power supply transformer 34 is supplied via the first path 35 to the inverter control unit 38, the fan motor control unit 39, and the actuator 40 (electronic consumption source). Electric power from the outdoor control power supply transformer 34 is supplied via the second path 41 to the outdoor microcomputer 43. In the first path 35 and the second path 41, voltage smoothing capacitors 36 and 42 are provided, respectively.

In the first path 35, a low-dropout voltage regulator 37 is provided. The low-dropout voltage regulator 37 has an on/off function, and functions as a voltage regulator when being on, and electric power is supplied to the inverter control unit 38 or the like. When the low-dropout voltage regulator 37 is off, supply of electric power to the inverter control unit 38 or the like is stopped.

The low-dropout voltage regulator 37 can be constituted by an electrical circuit, and is thus considerably smaller than a relay that includes a mechanical structure. A dropout voltage refers to a difference between an output voltage and an input voltage in a state where the circuit cannot maintain regulation if the input voltage is further reduced. The low-dropout voltage regulator refers to one with a dropout voltage of about 400 mV or less, normally, 100 to 300 mV.

In the air conditioner 1 described above, electric power is supplied via the first switch 21 and the second switch 22 of the first circuit 20 to the compressor driving motor 27 and the fan motor 28 in normal operation. In normal operation, the low-dropout voltage regulator 37 is turned on, and thus electric power is supplied to the inverter control unit 38, the fan motor control unit 39, and the actuator 40. In normal operation, electric power is supplied from the outdoor control power supply transformer 34 to the outdoor microcomputer 43.

A procedure in shifting from the normal operation to a standby state will be described.

For example, a remote controller (not shown) that constitutes a part of the indoor unit 50 issues a stop command, the first switch 21 and the second switch 22 are turned off by command of the outdoor microcomputer 43, and supply of electric power from the commercial power supply C.P to the compressor driving motor 27 and the fan motor 28 is stopped. In standby, the outdoor microcomputer 43 provides an off signal to the first switch 21 and the second switch 22 so as to maintain an off state.

Simultaneously, the low-dropout voltage regulator 37 is turned off by command of the outdoor microcomputer 43, and supply of electric power from the outdoor control power supply transformer 34 to the inverter control unit 38, the fan motor control unit 39, and the actuator 40 is stopped. In standby, the outdoor microcomputer 43 provides an off signal to the low--dropout voltage regulator 37 so as to maintain an off state.

Also in standby, electric power is supplied from the outdoor control power supply transformer 34 to the outdoor microcomputer 43.

In shifting from the standby state to normal operation, the air conditioner 1 operates as described bellow.

When the remote controller issues an operation command, the low-dropout voltage regulator 37 is turned on by command of the outdoor microcomputer 43, and supply of electric power from the outdoor control power supply transformer 34 to the inverter control unit 38, the fan motor control unit 39, and the actuator 40 is restarted. In normal operation, the outdoor microcomputer 43 provides an on signal to the low-dropout voltage regulator 37 so as to maintain an on state.

When the remote controller issues an operation command, the first switch 21 is turned on with the second switch 22 being off by command of the outdoor microcomputer 43. The outdoor microcomputer 43 monitors a charging amount of the capacitor 25, and turns on the second switch 22 when detecting completion of charging. Then, supply of electric power from the commercial power supply C.P to the compressor driving motor 27 and the fan motor 28 is restarted. In normal operation, an on signal is provided from the outdoor microcomputer 43 to the first switch 21 and the second switch 22 so as to maintain an on state.

The air conditioner 1 according to the first embodiment includes the low-dropout voltage regulator 37 having the on/off function on the secondary side of the outdoor control power supply transformer 34, and thus does not require a separate power supply circuit for the outdoor microcomputer 43. Also, the air conditioner 1 uses the low-dropout voltage regulator 37 as a regulator that stabilizes a voltage on the secondary side. This can reduce electric power in standby without providing a large component such as a conventional relay.

### <Second embodiment>

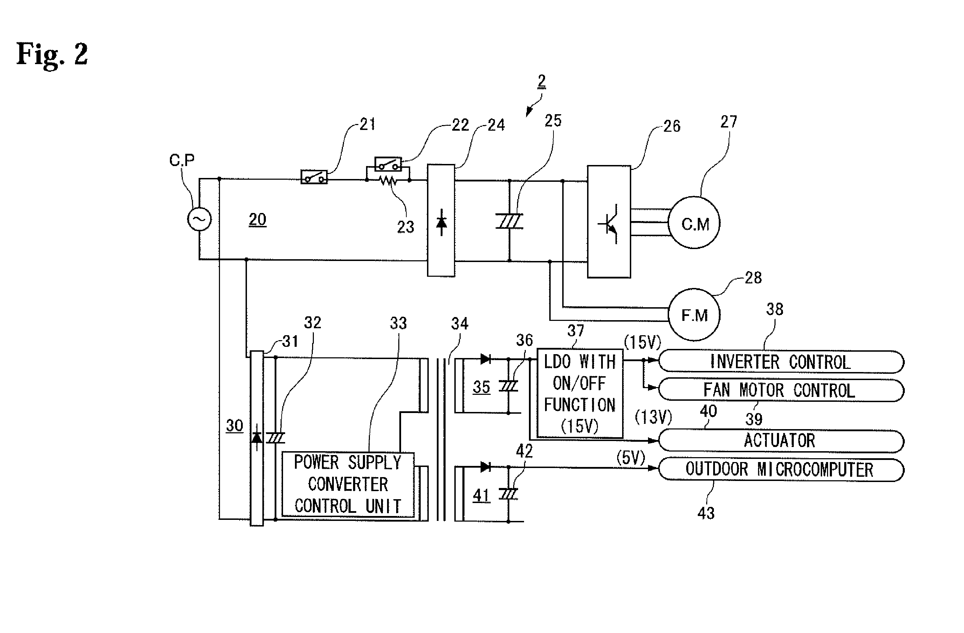

An air conditioner 2 according to a second embodiment of the present invention will be described with reference to FIG. 2.

A basic configuration of the air conditioner 2 is the same as that of the air conditioner 1 according to the first embodiment, and differences from the air conditioner 1 will be described below. In FIG. 2, the same components as in the air conditioner 1 are denoted by the same reference numerals as in FIG. 1. In FIG. 2, an indoor unit 50 is not shown. The reference numerals in drawings and omission of illustration of the indoor unit 50 also apply to third to sixth embodiments.

The air conditioner 1 supplies electric power to the actuator 40 via the low-dropout voltage regulator 37. In contrast to this, the air conditioner 2 is configured so that an electric power line connected to an actuator 40 in a first path 35 is branched off before a low-dropout voltage regulator 37, and electric power is supplied to the actuator 40 without passing through the low-dropout voltage regulator 37.

The air conditioner 2 thus configured can reduce power consumption in normal operation as compared to the air conditioner 1. Specifically, in the normal operation, electric power loss occurs in the low-dropout voltage regulator 37. The loss is proportional to a load supplied to the low-dropout voltage regulator 37, and if the number of electric power consumption sources connected to the low-dropout voltage regulator 37 is small, the loss can be reduced. In the air conditioner 2, the actuator 40 is excluded, and devices connected to the low-dropout voltage regulator 37 are limited to an inverter control unit 38 and a fan motor control unit 39. The two devices correspond to a compressor driving motor 27 and a fan motor 28, supply of electric power to the compressor driving motor 27 and a fan motor 28 being on/off by on/off of a first switch 21 of a first circuit 20. On/off of the supply of electric power to the actuator 40 is performed by command of an outdoor microcomputer 43.

The air conditioner 2 according to the second embodiment has the advantage of the first embodiment and also includes limited devices connected to the low-dropout voltage regulator 37, thereby reducing electric power consumption in normal operation.

### <Third embodiment>

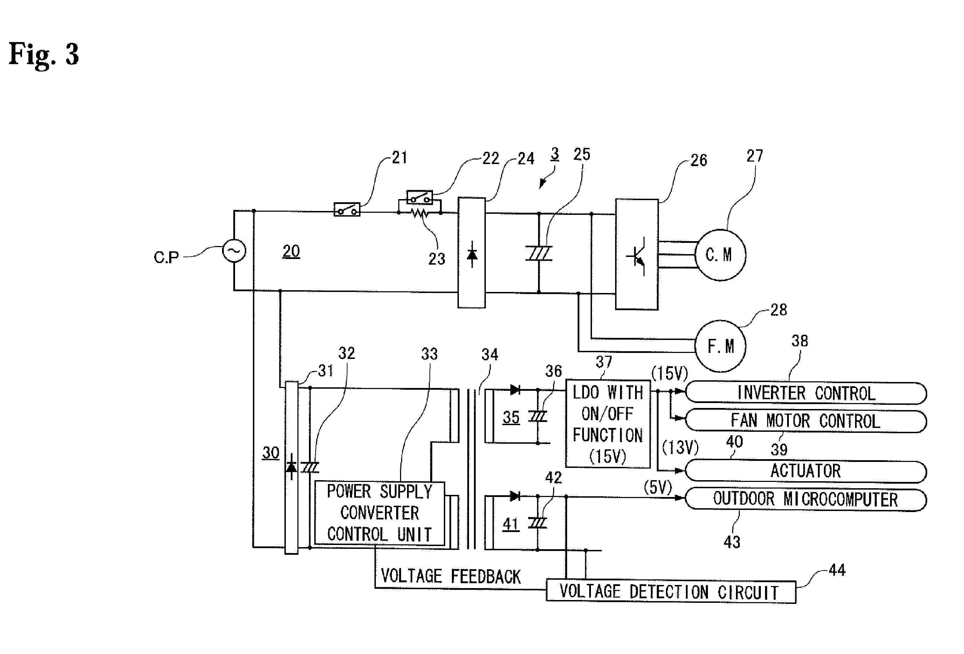

An air conditioner 3 according to a third embodiment of the present invention will be described with reference to FIG. 3.

In standby of the air conditioner 1, supply of electric power from the outdoor control power supply transformer 34 to the inverter control unit 38, the fan motor control unit 39, and the actuator 40 is stopped. This reduces electric power supplied from the outdoor control power supply transformer 34 and increases variations in voltage supplied to the outdoor microcomputer 43.

Thus, in the air conditioner 3, a voltage detection circuit 44 is provided in a second path 41 of the air conditioner 1, and a power supply converter control unit 33 is notified of a voltage (detected voltage) detected by the voltage detection circuit 44. The power supply converter control unit 33 controls a voltage supplied to the second path 41, that is, the outdoor microcomputer 43 to be a predetermined value based on the detected voltage.

The air conditioner 3 according to the third embodiment has the advantage of the first embodiment and also performs feedback control of the voltage supplied to the outdoor microcomputer 43 to stabilize the voltage and reduce electric power loss.

### <Fourth embodiment>

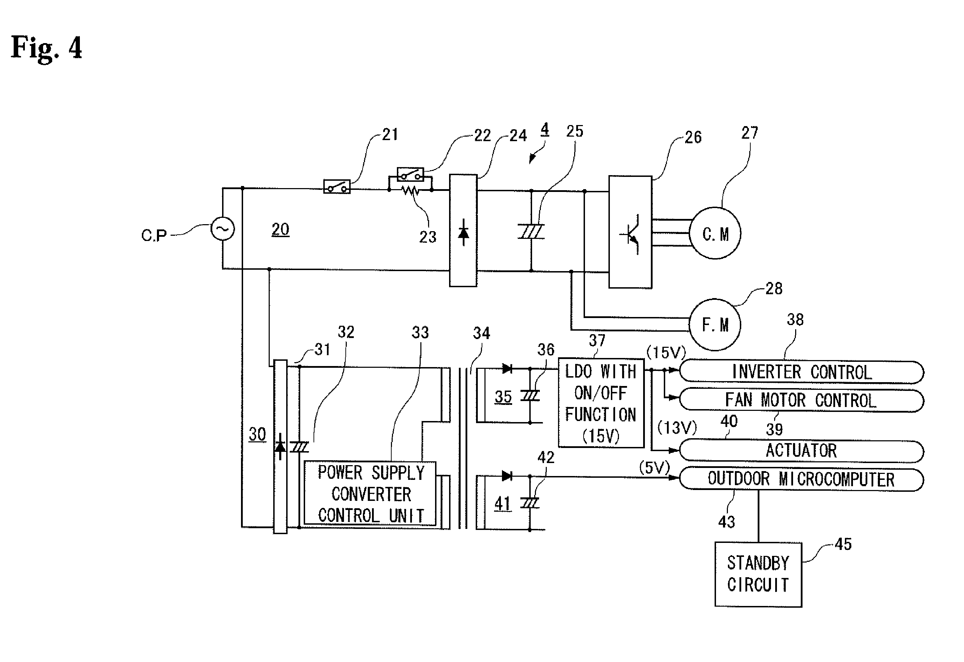

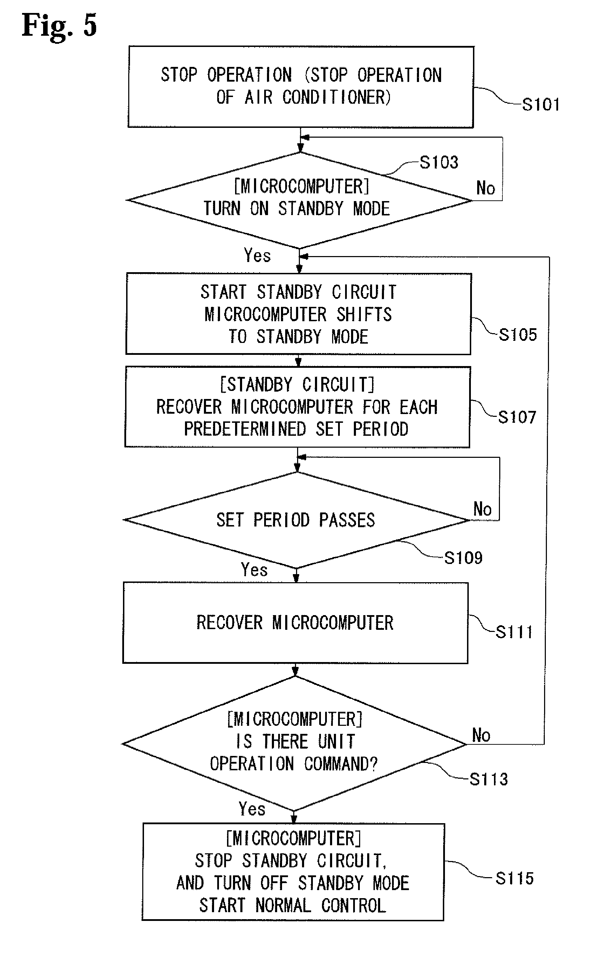

An air conditioner 4 according to a fourth embodiment of the present invention will be described with reference to FIGS. 4 and 5.

As described above, the air conditioner 1 in standby turns off the first switch 21 connecting the first circuit 20, and turns off the low-dropout voltage regulator 37 to stop supply of electric power to other than the outdoor microcomputer 43, thereby reducing loss.

The air conditioner 4 further includes a standby circuit 45 connected to an outdoor microcomputer 43 in order to save electric power of the outdoor microcomputer 43 in standby.

An operation procedure of the standby circuit 45 is as described below.

When a remote controller issues a stop command of the air conditioner 4 (S101 in FIG. 5), operations of the first switch 21, the second switch 22, and the low-dropout voltage regulator 37 described in the first embodiment are performed, an operation of the air conditioning unit is stopped, and the outdoor microcomputer 43 shifts to a standby mode (S103 in FIG. 5).

Then, the standby circuit 45 operates and the outdoor microcomputer 43 enters the standby mode (S105 in FIG. 5). The standby mode refers to reducing a clock frequency of the outdoor microcomputer 43, and stopping a part or all of functions of the outdoor microcomputer 43. This reduces power consumption of the outdoor microcomputer 43. For example, when a clock frequency in normal operation is 40 MHz, a clock frequency in the standby mode is 10 MHz.

The standby circuit 45 sends the outdoor microcomputer 43 a signal to command return of the clock frequency to a normal value or recovery of the function of the outdoor microcomputer 43 for each predetermined set period to recover the operation of the outdoor microcomputer 43 (S107 to S111 in FIG. 5).

The recovered outdoor microcomputer 43 checks a command of the remote controller, and if there is no unit operation command, the outdoor microcomputer 43 again enters the standby mode (S113 in FIG. 5). If the outdoor microcomputer 43 checks an operation command, the outdoor microcomputer 43 stops the standby circuit. Then, the outdoor microcomputer 43 passes through the standby mode and starts controls to perform normal operation (S115 in FIG. 5). States of the first switch 21 and the second switch 22 in normal operation are as described in the first embodiment.

In the air conditioner 4 having the configuration described above, the outdoor microcomputer 43 has the standby mode considering recovery, thereby further reducing power consumption in standby.

A program for achieving the standby mode is stored in the outdoor microcomputer 43, and the outdoor microcomputer 43 repeats a procedure, for example, as described below according to the program, thereby reducing power consumption in standby without separately providing the standby circuit 45.

When the outdoor microcomputer 43 receives a command to stop the air conditioner 4 from the remote controller, the first switch 21, the second switch 22, and the low-dropout voltage regulator 37 described in the first embodiment are operated, an operation of the air conditioning unit is stopped, and the outdoor microcomputer 43 shifts to a standby mode. At this time, the outdoor microcomputer 43 informs an indoor unit 50 of entering the standby state by communication.

The outdoor microcomputer 43 blocks communication with the indoor unit 50 to reduce power consumption.

Then, the outdoor microcomputer 43 reduces performance, specifically, reduces the clock frequency (for example, from 40 MHz to 10 MHz). Simultaneously, the outdoor microcomputer 43 starts a timer, and operates, for example, a timer interrupt of 1 sec. After 1 sec, the clock frequency is returned to the original value by timer interrupt processing (for example, from 10 MHz to 40 MHz).

The outdoor microcomputer 43 returns the clock frequency to the original value, then restarts communication with the indoor unit 50, and informs the indoor unit 50 of recovery from the standby state by communication.

The recovered outdoor microcomputer 43 checks a command of the remote controller, and if there is no operation command to the unit, the outdoor microcomputer 43 again shifts to the standby mode. If the outdoor microcomputer 43 checks an operation command, the outdoor microcomputer 43 starts normal operation control.

### <Fifth embodiment>

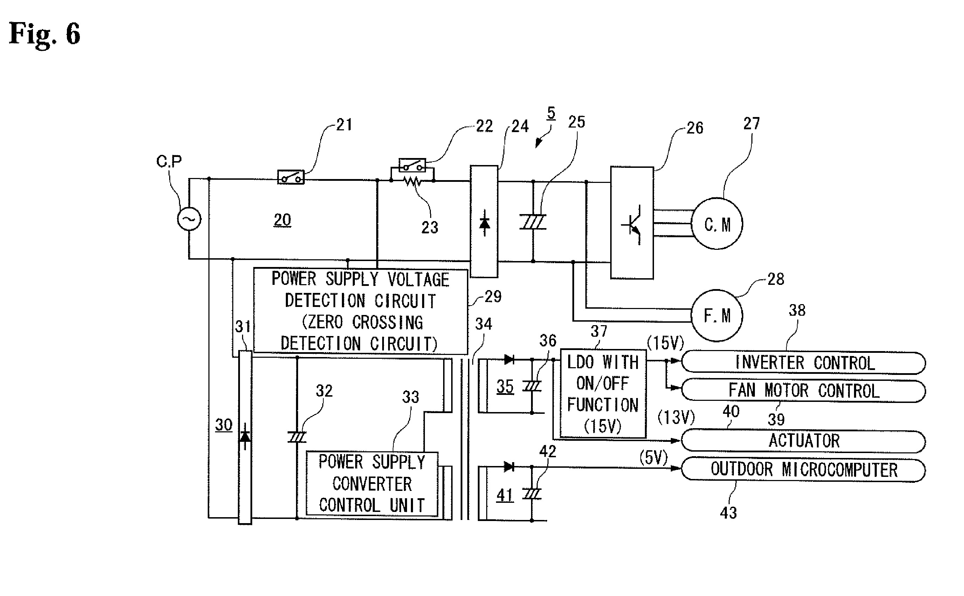

An air conditioner 5 according to a fifth embodiment of the present invention will be described with reference to FIG. 6.

The air conditioner 5 includes a zero crossing detection circuit 29 between a first switch 21 and a second switch 22 of a first circuit 20 as compared to the air conditioner 1.

As well known, the zero crossing detection circuit 29 is a circuit that detects passage of a zero point (zero crossing point) of an alternating current voltage in switching on/off of an alternating current power supply. When the zero crossing detection circuit 29 is used, for example, a harmonic reduction circuit (not shown) can be controlled based on the zero crossing point, thereby reducing harmonic components of an input current.

If the zero crossing detection circuit 29 is provided on an upstream side of the first switch 21, a load is provided to the zero cross detection circuit 29 even in standby when the first switch 21 is off, thereby causing electric power loss. In contrast to this, the air conditioner 5 includes the zero crossing detection circuit 29 between the first switch 21 and the second switch 22 (converter 24). In standby of the air conditioner 5, the first switch 21 is off, and no load is applied to the zero crossing detection circuit 29, thereby causing no electric power loss.

The air conditioner 5 specifies a placement position of the zero crossing detection circuit 29, thereby further reducing electric power loss in standby.

### <Sixth embodiment>

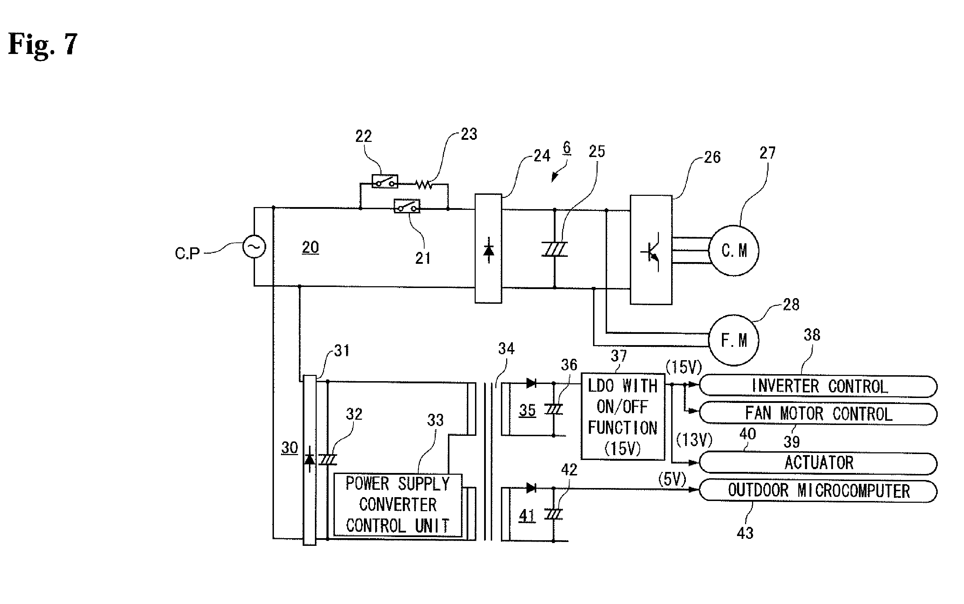

An air conditioner 6 according to a sixth embodiment of the present invention will be described with reference to FIG. 7.

The air conditioner 6 changes placement of the first switch 21 and the second switch 22 in the air conditioner 1. Specifically, in the air conditioner 1, the first switch 21 and the second switch 22 are placed in series, while in the air conditioner 6, a first switch 21 and a second switch 22 are placed in parallel.

In the air conditioner 6, the second switch 22 is turned on with the first switch 21 being off when supply of electric power to a compressor driving motor 27 and a fan motor 28 is to be started. At this time, the current flows through the second switch 22 and resistance means 23 to a converter 24 and a capacitor 25. When charging of the capacitor 25 is completed, the first switch 21 is turned on, while the second switch 22 is turned off. Thereafter, a current flows through the first switch 21.

In the air conditioner 6 described above, a period when the second switch 22 is on is short and lasts until charging of the capacitor 25 is completed, and thus a relay having a small current capacity can be used. This can reduce a size of the second switch 22. Since a current flows only through the first switch 21 in normal operation, the air conditioner 6 can reduce excitation loss as compared to the air conditioner 1 in which a current flows through both the first switch 21 and the second switch 22.

### <Seventh embodiment>

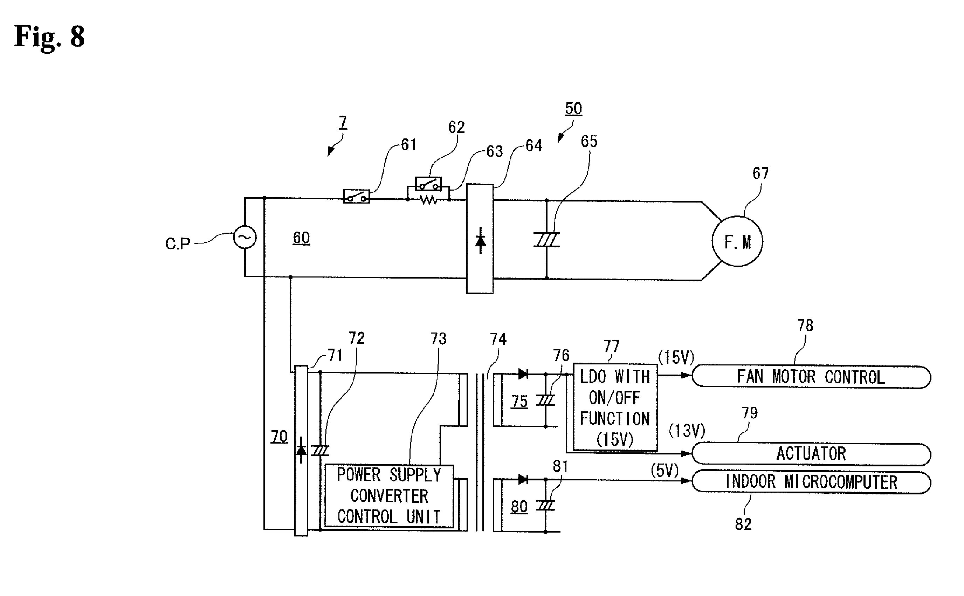

An air conditioner 7 according to a seventh embodiment of the present invention will be described with reference to FIG. 8.

The seventh embodiment shows an example of the present invention applied to an indoor unit 50. FIG. 8 does not show an outdoor unit.

The indoor unit 50 includes a first circuit 60 connected to a commercial power supply C.P, and a second circuit 70 branching off from the first circuit 60.

The first circuit 60 supplies electric power to a fan motor 67 for an indoor heat exchanger. The first circuit 60 includes a converter 64 that converts alternating current from the commercial power supply C.P into direct current, and a voltage smoothing capacitor 65.

In the first circuit 60, the converter 64 converts alternating current from the commercial power supply C.P into direct current, and the direct current is smoothed by the capacitor 65 and then supplied to the fan motor 67. On/off control of current supply of the fan motor 67 is performed by command of the fan motor control unit 78.

In the first circuit 60, a first switch 61 and a second switch 62 are provided in order from a side of the commercial power supply C.P. The second switch 62 is connected in parallel to resistance means 63 provided on the first circuit 60. The first switch 61 controls on/off supply of electric power to the first circuit 60. The second switch 62 has a function of reducing a peak of an inrush current together with the resistance means 63. On/off operations of the first switch 61 and the second switch 62 are the same as the air conditioner 1 according to the first embodiment.

The second circuit 70 supplies electric power to the fan motor control unit 78, an actuator 79, and an indoor microcomputer 82. As described above, the fan motor control unit 78 controls on/off the fan motor 67. The actuator 79 is a motor actuator that operates various valves such as an electronic expansion valve provided in a refrigeration cycle of the indoor unit 50. The actuator 79 is operated by command of the indoor microcomputer 82.

A primary side of the second circuit 70 includes a converter 71 that converts alternating current from the commercial power supply C.P into direct current, a capacitor 72 that smooths the direct current from the converter 71, a power supply converter control unit 73, and an indoor control power supply transformer 74 that supplies electric power to a secondary side based on the direct current having passed through the capacitor 72.

A secondary side of the second circuit 70 is divided into a first path 75 and a second path 80. Electric power from the indoor control power supply transformer 74 is supplied via the first path 75 to the fan motor control unit 78 and the actuator 79. Electric power from the indoor control power supply transformer 74 is supplied via the second path 80 to the indoor microcomputer 82. In the first path 75 and the second path 80, voltage smoothing capacitors 76 and 81 are provided, respectively.

In the first path 75, a low-dropout voltage regulator 77 is provided. The low-dropout voltage regulator 77 has an on/off function, and functions as a voltage regulator when being on, and electric power is supplied to the fan motor control unit 78. When the low-dropout voltage regulator 77 is off, supply of the electric power to the fan motor control unit 78 is stopped.

The low-dropout voltage regulator 77 can be constituted by an electrical circuit, and is thus considerably smaller than a relay that constitutes a mechanical structure.

In the air conditioner 7 as described above, electric power is supplied via the first switch 61 and the second switch 62 in the first circuit 60 to the fan motor 67 in normal operation. Also, the low-dropout voltage regulator 77 is turned on to supply electric power to the fan motor control unit 78 in normal operation. Electric power is supplied from the indoor control power supply transformer 74 to the outdoor microcomputer 43 in normal operation.

A procedure in shifting from normal operation to a standby state will be described.

For example, when a remote controller (not shown) issues a stop command, the first switch 61 and the second switch 62 are turned off by command of the indoor microcomputer 82, and supply of electric power from the commercial power supply C.P to the fan motor 67 is stopped. In standby, the indoor microcomputer 82 provides an off signal to the first switch 61 and the second switch 62 so as to maintain the off state.

Simultaneously, the low-dropout voltage regulator 77 is turned off by command of the indoor microcomputer 82, and supply of electric power from the indoor control power supply transformer 74 to the fan motor control unit 39 is stopped. In standby, the indoor microcomputer 82 provides an off signal to the low-dropout voltage regulator 77 so as to maintain the off state.

Also in standby, the indoor control power supply transformer 74 supplies electric power to the indoor microcomputer 82 and the actuator 79.

In shifting from the standby state to the normal operation, the air conditioner 7 operates as described below.

When the remote controller issues an operation command, the low-dropout voltage regulator 77 is turned on by command of the indoor microcomputer 82, and supply of electric power from the indoor control power supply transformer 74 to the fan motor control unit 78 is restarted. In normal operation, the indoor microcomputer 82 provides an on signal to the low-dropout voltage regulator 77 so as to maintain an on state.

When the remote controller issues an operation command, the first switch 61 is turned on with the second switch 62 being off by command of the indoor microcomputer 82. When the capacitor 65 is charged, the second switch 62 is turned on. Then, electric power is supplied to the fan motor 67. In normal operation, the indoor microcomputer 82 provides an on signal to the first switch 61 and the second switch 62 so as to maintain the on state.

The air conditioner 7 according to the seventh embodiment includes the low-dropout voltage regulator 77 having the on/off function on the secondary side of the indoor control power supply transformer 74, and thus does not require a separate power supply circuit for the indoor microcomputer 82. Also, the air conditioner 7 uses the low-dropout voltage regulator 77 as a regulator that stabilizes the voltage on the secondary side. This can reduce electric power in standby without placing a large component such as a conventional relay.

The first to seventh embodiments have been described, and it goes without saying that the present invention accepts combinations of the embodiments. For example, the voltage detection circuit 44 in the third embodiment may be provided in the air conditioner 2 in the second embodiment, or the standby circuit 45 in the fourth embodiment may be provided in the air conditioner 2 in the second embodiment.

The indoor unit 50 used in the first to sixth embodiments is not limited to that according to the seventh embodiment, but various known indoor units may be applied including a device that receives supply of electric power via the outdoor control power supply transformer 34 to operate the fan motor or the like in the embodiments 1 to 6.

Further, the outdoor unit used in the seventh embodiment is not limited to those according to the first to sixth embodiments, but various known outdoor units may be applied including a device that receives supply of electric power via the indoor control power supply transformer 74 to operate the compressor driving motor, the fan motor, or the like in the seventh embodiment.

Further, the configurations described in the embodiment may be chosen or changed to other configurations without departing from the gist of the present invention.

### Reference Signs List

- 1,2,3,4,5,6,7: air conditioner
- 10: outdoor unit
- 20: first circuit
- 21: first switch
- 22: second switch
- 24: converter
- 26: inverter
- 27: compressor driving motor
- 28: fan motor
- 29: zero crossing detection circuit
- 30: second circuit
- 31: converter
- 33: power supply converter control unit
- 34: outdoor control power supply transformer
- 35: first path
- 37: low-dropout voltage regulator
- 38: inverter control unit
- 39: fan motor control unit
- 40: actuator
- 41: second path
- 43: outdoor microcomputer
- 44: voltage detection circuit
- 45: standby circuit
- 50: indoor unit
- 60: first circuit
- 61: first switch
- 62: second switch
- 63: resistance means
- 64: converter
- 65: capacitor
- 67: fan motor
- 70: second circuit
- 71: converter
- 73: power supply converter control unit
- 74: indoor control power supply transformer
- 75: first path
- 77: low-dropout voltage regulator
- 78: fan motor control unit
- 79: actuator
- 80: second path
- 82: indoor microcomputer
- C.P: commercial power supply

## Claims

1. An air conditioner comprising:
an indoor unit; and
an outdoor unit,
wherein the outdoor unit includes a first circuit and a second circuit,
the first circuit includes a converter that converts alternating current supplied from a commercial power supply into direct current, an inverter that converts direct current converted by the converter into alternating current, and a compressor driving motor to which electric power is supplied via the inverter,
the second circuit includes an outdoor control power supply that converts a voltage of the commercial power supply and supplies electric power, a first path and a second path to which electric power is supplied from the outdoor control power supply, a low-dropout voltage regulator provided in the first path, an electric power consumption source provided in the first path and including an operation control unit of the inverter to which electric power is supplied via the low-dropout voltage regulator, and an outdoor microcomputer provided in the second path,
the low-dropout voltage regulator has a function of stopping supply of electric power to the electric power consumption source, and
the low-dropout voltage regulator stops supply of electric power to the electric power consumption source in a standby state in which supply of electric power to the compressor driving motor is stopped.

2. The air conditioner according to claim 1, wherein an electric power consumption source is provided in the first path, supply of electric power from the outdoor control power supply to the electric power consumption source being stoppable by the outdoor microcomputer, and
electric power to the electric power consumption source is supplied without passing through the low-dropout voltage regulator.

3. The air conditioner according to claim 1 or 2,
wherein the second path includes a voltage detection circuit, and an output voltage from the outdoor control power supply is controlled based on a detection result of the voltage detection circuit.

4. The air conditioner according to any one of claims 1 to 3, wherein performance of the outdoor microcomputer is reduced in the standby state.

5. The air conditioner according to any one of claims 1 to 4, wherein the first circuit includes a first switch that is placed between the commercial power supply and the converter, and controls whether electric power can be supplied to the converter, and a zero crossing detection circuit placed between the first switch and the converter.

6. The air conditioner according to any one of claims 1 to 5, wherein the first circuit includes circuits parallel to each other between the commercial power supply and the converter,
a first switch is placed in one path of the parallel circuits, and
a second switch and a resistance means are placed in series in order from a side of the commercial power supply in the other path of the parallel circuits.

7. An air conditioner comprising:
an indoor unit; and
an outdoor unit,
wherein the indoor unit includes a first circuit and a second circuit,
the first circuit includes a converter that converts alternating current supplied from a commercial power supply into direct current, and a fan motor for a heat exchanger connected to the converter,
the second circuit includes an indoor control power supply that converts a voltage of the commercial power supply and supplies electric power, and a first path and a second path to which electric power is supplied from the indoor control power supply, a low-dropout voltage regulator provided in the first path, an electric power consumption source provided in the first path and including an operation control unit of the fan motor for the heat exchanger to which electric power is supplied via the low-dropout voltage regulator, and an indoor microcomputer provided in the second path,
the low-dropout voltage regulator has a function of stopping supply of electric power to the electric power consumption source, and
the low-dropout voltage regulator stops supply of electric power to the operation control unit in a standby state in which supply of electric power to the fan motor for the heat exchanger is stopped.
